# EUROPÄISCHE PATENTSCHRIFT

(11) **EP 0 538 514 B1**
(45) Veröffentlichungstag und Bekanntmachung des Hinweises auf die Patenterteilung: **14.06.1995**
(21) Anmeldenummer: 91118258.2
(22) Anmeldetag: 25.10.1991
(51) Int. Cl.: G09B 29/10, G08G 1/123, G08G 1/0968

(54) **Auskunfts- und Zielführungssystem für den öffentlichen Personenverkehr**
Information and guidance system for public transport
Système de renseignement et de guidage destiné au transport en commun

(43) Veröffentlichungstag der Anmeldung: 28.04.1993
(73) Patentinhaber: SIEMENS AKTIENGESELLSCHAFT, 80333 München (DE)
(72) Erfinder: von Tomkewitsch, Romuald, Dipl.-Ing., W-8026 Ebenhausen (DE)

(56) Entgegenhaltungen:
- EP-A- 0 261 450
- EP-A- 0 333 330
- EP-A- 0 451 756
- DE-A- 3 910 194
- DE-C- 3 445 668
- FR-A- 2 648 602
- FR-A- 2 663 446

## Beschreibung

Die Erfindung bezieht sich auf ein Auskunfts- und Zielführungs-System gemäß dem Oberbegriff des Anspruches 1.

Informationen über Verkehrsverbindungen mit den Öffentlichen Personenverkehr werden heutzutage hauptsächlich über Schautafeln und Tabellen an Haltestellen vermittelt. Für Ortsunkundige sind solche Fahrpläne oft schwer zu lesen, denn sie setzen eine Kenntnis der lokalen Gegebenheiten voraus. So sollte man die Zielhaltestelle kennen und auch ungefähr wissen, wo sie liegt, damit man das geeignete Verkehrsmittel, S-, U-Bahn, Bus, Straßenbahn, die zum Ziel führenden Linien, die Umsteigemöglichkeiten, die Abfahrtszeiten und den Fahrpreis suchen kann. Ortsunkundige benötigen deshalb zur Orientierung unbedinglich zusätzlich einen Stadtplan. Ausländer müssen über ausreichende Sprachkenntnisse verfügen. Abweichungen von Fahrplänen, z.B. Verspätungen oder Totalausfälle, können nur an Bahnhöfen bzw. Haltestellen mit Lautsprecheranlagen bekanntgemacht werden.

Es fehlte daher nicht an Bestrebungen der Verkehrsbetriebe, ihre Auskunftssysteme fahrgastfreundlicher zu gestalten, um die Akzeptanz öffentlicher Verkehrssysteme zu erhöhen und auch Kunden zu gewinnen, die sie nicht regelmäßig benutzen. Verbesserte Auskunftssysteme, wie Sichtstationen mit Tastaturen zur Eingabe der Fragen und zum Ausdrucken der entsprechenden Fahrplandaten sind jedoch sehr teuer, so daß sie nicht an allen Haltestellen installiert werden können. Man findet solche Informationsterminales (Elektronische Fahrplanauskunft EFA") nur an Bahnhöfen größerer Städte und Flughäfen. Dort werden sie hauptsächlich von Reisenden benutzt, die häufig unterwegs sind und sich an die relativ komplizierte Bedienung gewöhnt haben.

Reisende ohne Großstadterfahrung kommen gar nicht auf die Idee, nach Auskunftsautomaten Ausschau zu halten. Sie haben weder die Zeit noch die Ruhe, die Bedienanleitung zu studieren oder sie scheuen sich überhaupt vor dieser Technik. Akzeptiert wird meist nur, was regelmäßig benutzbar ist. Gäbe es Auskunftssysteme an allen Haltestellen in allen Städten, so würde ihr Gebrauch zur Gewohnheit. Die Hemmschwelle, den öffentlichen Nahverkehr zu benutzen, könnte gesenkt werden.

In der EP-A-0 333 330 ist ein Informations-Verteilungs-System beschrieben, welches ein tragbares drahtloses Telefon (Funk-Telefon, z.B. hand set) und viele Basisstationen (telepoints auf öffentlichen Plätzen) aufweist. In der Basisstation sind Navigationsdaten und eventuell andere Daten (z.B. Wetterbericht, örtliche Verkehrsinformationen) abgespeichert. Diese Daten können mit dem hand set abgefragt und angezeigt werden. Das bekannte System dient der Routenfindung, um ein gewünschtes Ziel zu erreichen. Eine Zugauskunft und Fahrplanhinweise, sowie Angaben darüber, wann fährt welches öffentliche Verkehrsmittel an ein eingebbares Ziel und zu welchem Preis, ist dort nicht vorgesehen.

Aufgabe der Erfindung ist es, ein Informationssystem derart weiterzubilden, daß es als Auskunfts-System für den öffentlichen Personenverkehr genutzt werden kann. Darüber hinaus soll für einen verbreiteten Einsatz von Auskunftssystemen eine einfach Handhabung bei niedrigen Systemkosten geschaffen und eine hohe Sabotagesicherheit gewährleistet werden.

Diese Aufgabe wird mit einem erfindungsgemäßen Auskunfts- und Zielführungs-System mit den Merkmalen des Anspruchs 1 gelöst.

Bei dem erfindungsgemäßen Auskunfts- und Zielführungs-System benutzt der Verkehrsteilnehmer ein kleines Handterminal, welches einen Adressenspeicher, Bedien- und Anzeigevorrichtungen und eine Übertragungseinrichtung aufweist. An jeder Haltestelle ist ein Datenspeicher mit einer Übertragungseinrichtung angeordnet, mit dem der Verkehrsteilnehmer mit seinem Handterminal kommunizieren kann. Auf diese Weise ist eine Aufteilung der Funktion eines Auskunftssystems für den öffentlichen Verkehr auf das Bedien- und Anzeigegerät (Terminal) und einen Datenspeicher vorgenommen worden. Dabei ist das Gebiet des Öffentlichen Personenverkehrs, insbesondere Personennahverkehrs, ist in eine Vielzahl von Zielgebieten unterteilt, die ihrerseits in jeweilige Zielsegmente unterteilt sind, wobei jedes Zielsegment noch in weitere Zielfelder, sogenannte Fußgängerfelder, unterteilt ist. Diese Zielgebietseinteilung ist aufgrund eines einmal festgelegten Koordinatensystems im Datenspeicher abgespeichert. Der Datenspeicher, der u.a. auch einen Rechner aufweist, ist zweckmäßigerweise am Mast der Haltestelle in einer für einen Fußgänger nicht erreichbaren Höhe angeordnet. Im Datenspeicher sind zusätzlich zu den Koordinaten der entsprechenden Zielgebietseinteilung Verkehrsverbindungen, Verkehrsmittel, Umsteigestellen, Ankunfts und Abfahrtszeiten sowie Fahrzeiten und Fahrpreise hinterlegt. Im Handterminal sind eine Mehrzahl von bestimmten, teilweise persönlichen Zieladressen des Benutzers sowie Orte von allgemeiner Bedeutung im allgemeinen alphanumerisch und mit den dazugehörigen Koordinaten eingespeichert. Der Benutzer wählt die gewünschte Zieladresse aus und überträgt vom Terminal aus die entsprechenden Zielpunktskoordinaten zum Datenspeicher, wobei er das Terminal zum Datenspeicher ausrichtet und der Datenaustausch über eine Übertragungsstrecke, die zweckmäßigerweise von einer Funkübertragung (z.B. HF oder Infrarot) gebildet ist, erfolgt. Der Datenspeicher ermittelt aus den empfangenen Zielkoordinaten das entsprechende Zielgebiet oder Zielsegment bzw. Fußgängerfeld sowie die erforderlichen Verkehrsmittel und -wege mit den zugehörigen Fahrdaten und überträgt diese zum Handterminal, welches diese Daten anzeigt.

Das erfindungsgemäße Auskunfts- und Zielführungs-System hat den Vorteil einer einfachen Handhabung. Eine hohe Sabotagesicherheit ist dadurch gewährleistet, daß lediglich der Datenspeicher an der Haltestelle angeordnet ist, und zwar derart, daß er nicht ohne weiteres erreicht werden kann, so daß, wie bei Schautafeln oder Automaten es häufig vorkommt, weder Glasscheiben eingeschlagen noch zugesprüht, weder Tastatur noch andere Einrichtungen gewaltsam beschädigt werden können.

In einer Weiterbildung der Erfindung kann das Handterminal so ausgebildet sein, daß es an einem Fahrzeug-Navigations-Rechner angebracht und mit diesem elektrisch leitend verbunden werden kann bzw. das derartige Bedien- und Anzeigeeinheiten so ausgestaltet sind, daß sie aufgrund einer zusätzlichen (Infrarot-) Übertragungseinrichtung aus dem Fahrzeug mitgenommen werden können, um an der Haltestelle mit dem dortigen Datenspeicher zu kommunizieren.

In einer weiterer Ausgestaltung der Erfindung weist der Datenspeicher eine weitere Übertragungseinrichtung auf, die für den Datenaustausch mit einem Fahrzeugdatenspeicher der vorbeifahrenden Verkehrsmittel ausgelegt ist. Auf diese Weise können vom Verkehrsmittel aus sich verändernde Fahrplandaten, z.B. Verspätungen, zu den Haltestellen übertragen und damit der dortige Datenspeicher aktualisiert werden.

Weitere Einzelheiten und Vorteil der Erfindung werden in folgenden anhand der Zeichnung erläutert. Dabei zeigen
- Fig. 1: eine prinzipielle Darstellung des Auskunfts- und Zielführungs-Systems,
- Fig. 2: ein Handterminal,
- Fig. 3: einen Ausschnitt eines ÖPNV-Plans mit Zielsegmenten und
- Fig. 4: Fußgängerfelder im Zielsegment für eine Zielführung.

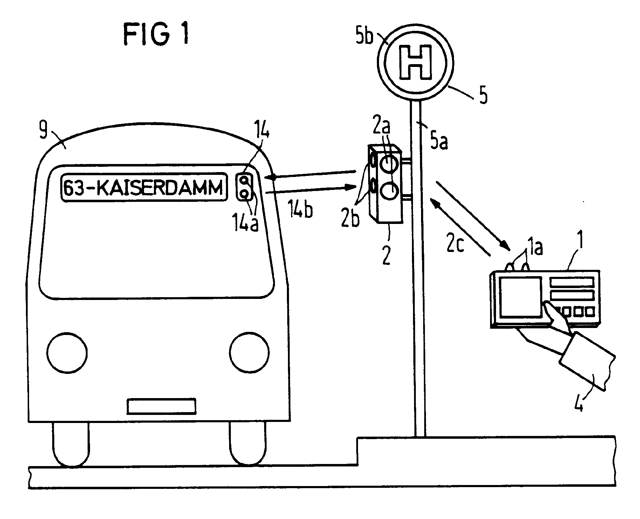

Wie bereits erwähnt, ist das erfindungsgemäße Auskunfts- und Zielführungs-System für den öffentlichen Verkehr, insbesondere Nahverkehr, in seinen Funktionen in ein Handterminal, d.h. Bedien- und Anzeigegerät 1 und einen Datenspeicher 2 aufgeteilt. Dieser Datenspeicher 2 ist in einem robusten Gehäuse untergebracht und am Mast 5a einer Haltestelle 5 mit den üblichen Haltestellen-Symbol 5b angeordnet (Fig.1). Dies ist beispielsweise eine Haltestelle 5 für Busse oder Straßenbahnen als Verkehrsmittel 9. Der Datenspeicher 2 kann selbstverständlich auch an Haltestellen der U- und S-Bahn angeordnet sein.

Zweckmäßigerweise ist das Gerät des Datenspeichers 2 sehr hoch am Mast 5a montiert, so daß er für einen Fußgänger ohne Hilfsmittel nicht erreicht werden kann und es daher erschwert ist, den Datenspeicher zu manipulieren, zu beschädigen oder zu zerstören. Das Bedien- und Anzeigegerät ist als Handterminal 1 ausgebildet und hat eine Form, die sich zum Mitführen auf Fahrten bzw. Reisen gut eignet, so daß es sich jeder potentielle Kunde 4 des Öffentlichen Nahverkehrs kaufen kann. Es ist auch denkbar, bei Großveranstaltungen, wie z.B. Olympische spiele, Weltmeisterschaften, Ausstellungen usw. den Besuchern bzw. den Verkehrsteilnehmern (4) ein solches Gerät (1) zu leihen. Als persönliches oder mitgeführtes Eigentum ist das Handterminal (1) in vorteilhafter Weise dem Vandalismus entzogen. Darüberhinaus verursacht es den Verkehrsbetrieben keine Kosten.

In dem Handterminal 1 werden alle Namen, postalischen Anschriften und Telefonnummern von Personen gespeichert, die für den Besitzer bzw. Verkehrsteilnehmer 4 von Interesse sind. Dieses können Verwandte oder Freunde oder auch geschäftliche bzw. private Personen sein, zu denen Beziehungen bestehen. Darüberhinaus können im Handterminal 1 Orte von allgemeiner Bedeutung, wie Sportstätten, Hotels, Restaurants usw.eingespeichert werden, die beispielsweise vom Verleiher oder auch von den Verkehrsbetrieben eingespeichert werden. Das Handterminal läßt sich vom Besitzer wie ein elektronisches Adressenverzeichnis handhaben, dabei können neue Daten hinzugeführt, alte gelöscht oder sich ändernde korrigiert werden. Zusätzlich zu den genannten Angaben werden im Handterminal die zu den Anschriften gehörenden Koordinaten X, Y gespeichert, die sich auf ein einmalig festgelegtes Koordinatensystem beziehen. Solche Koordinaten können auch wie Telefonnummern in Adressbüchern oder Telefonbüchern oder aber auch auf den Briefköpfen oder Visitenkarten mitpubliziert werden, so daß sie ohne weiteres direkt vom Benutzer des Terminals in das Terminal eingegeben werden können.

Kommt der Verkehrsteilnehmer 4 mit seinem Handterminal 1 an eine entsprechend ausgerüstete Haltestelle 5 eines öffentlichen Nahverkehrsmittels 9, so genügt es, das Handterminal 1 in eine geeignete Position zu bringen, die gewünschte Zieladresse 6 einzustellen oder am Terminal 1 aufzurufen und für die Übertragung zum Datenspeicher 2 eine Starttaste 10 zu drücken. Daraufhin sendet das Handterminal 1 über eine Übertragungseinrichtung 1a per HF-Funk oder Infrarotstrahlung (Übertragungsstrecke 2c) die Zielkoordinaten 6 bzw. X_{z},Y_{z} an den Datenspeicher 2. Der Datenspeicher 2 weist eine entsprechende Übertragungseinrichtung 2a auf, mit der diese Daten empfangen werden. Üblicherweise wird man die Übertragungsstrecke so dimensionieren, daß eine hierfür erforderliche Entfernung ohne weiteres überbrückt werden kann.

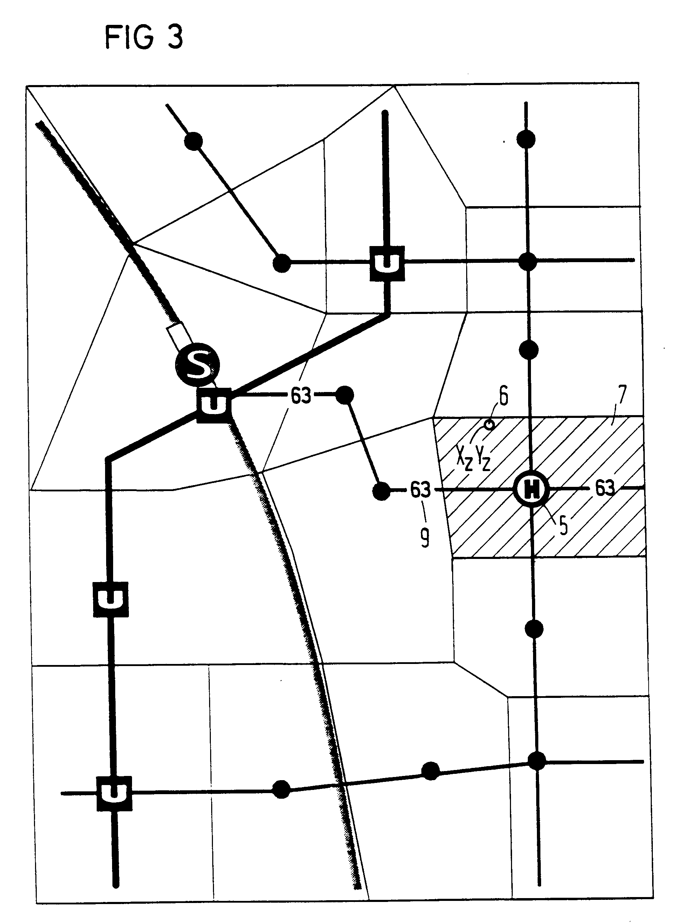

Wenn der Datenspeicher 2 die Zielkoordinaten 6 (X_{z}, Y_{z}) empfangen hat, ermittelt der Rechner des Datenspeichers 2 das Zielgebiet bzw. das Zielsegment 7, in dem das Ziel 6 des nachfragenden Verkehrsteilnehmers 4 liegt (siehe Figur 3). Um diese Suchfunktion erfüllen zu können, verfügt der Datenspeicher 2 über die Zielgebietseinteilung, wobei Grobzielgebiete festgelegt sind, innerhalb derer die Zielsegmente 7 liegen. Jedes Zielsegment 7 ist für die Zielführung noch in Fußgängerfelder bzw. Zielfelder 8 eingeteilt (Fig.4). Die Zielgebiete 7,8 werden von den zuständigen Verkehrsbetrieben in der Regel als unregelmäßige Vielecke festgelegt, derart, daß sich kürzeste Fußgängerentfernungen zu allen denkbaren Zielen ergeben. Dabei werden nicht direkt passierbare Grenzen, wie Flußläufe, Bahnlinien, Autobahnen aber auch Grundstücke, Felder usw. berücksichtigt.

Im Datenspeicher 2 sind die Eckpunkt-Koordinaten der Zielgebiete hinterlegt, so daß in der Regel mit vier Eckpunkt-Koordinaten ein Zielsegment 7 beschrieben ist. Der Rechner des Datenspeichers 2 ermittelt das gewünschte Zielgebiet 7 bzw.8 nach einem an sich bekannten Verfahren, wie es beispielsweise in der europäischen Patentschrift 0 261 450 beschrieben ist. Hat der Rechner das gesuchte Zielgebiet 7 ermittelt, so entnimmt er einer Liste den Namen der Zielhaltestelle 5, das zu dieser Haltestelle 5 fahrende Verkehrsmittel 9 und/oder diejenigen Verkehrsmittel, die von der auskunftgebenden Haltestelle am günstigsten zur Umsteigstelle für das zum Ziel führende Verkehrsmittel führen sowie deren nächste Abfahrtszeit, den oder die Namen von Umsteigestellen, die fahrplanmäßige Ankunftszeit und evtl. die reine Fahrzeit, den Fahrpreis bzw. die Anzahl der hierfür erforderlichen Streifen einer Streifenkarte.

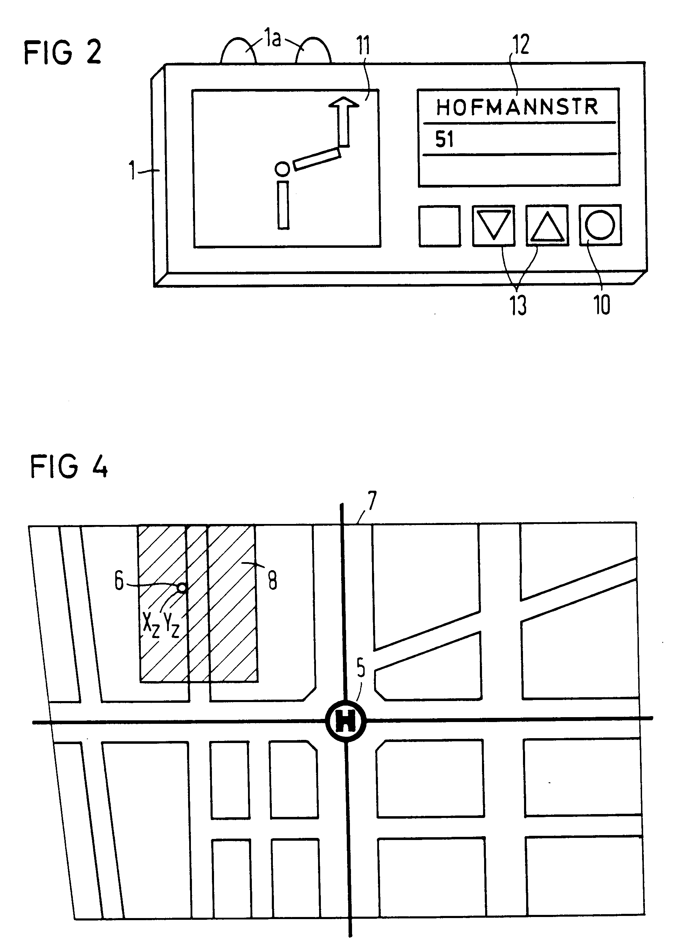

All diese Daten sendet der Datenspeicher 2 über die gleiche Übertragungsstrecke 2c zurück an das Handterminal 1 des Verkehrsteilnehmers 4, wo sie in geeigneter Weise auf einem Display 12 angezeigt werden (Fig.2).

Erreicht nun der Verkehrsteilnehmer 4 die Zielhaltestelle 5, so kann er sich in ähnlicher Weise Auskunft über den anschließenden Fußweg bis zu seiner Zieladresse 6 bzw. den durch die Zielkoordinaten X_{z}, Y_{z} beschriebenen Punkt erteilen lassen (Fig.4). Dazu richtet er sein Bedien- und Anzeigegerät, Handterminal 1 auf den Datenspeicher 2 am Mast 5a der Zielhaltestelle 5 aus und betätigt die Starttaste 10. Im Datenspeicher 2 der Zielhaltestelle läuft daraufhin der gleiche Vorgang ab wie oben beschrieben. Der Unterschied besteht lediglich darin, daß der Rechner des Datenspeichers 2 erkennt, daß das Ziel X_{z}, Y_{z} in seinem eigenen Zielgebiet 7 liegt. Er sucht daraufhin, in welchem Fußgängerfeld 8 der Zielpunkt 6 liegt. Die Fußgängerfelder 8 haben prinzipiell eine vergleichbare Funktion wie die Zielsegmente 7: Sie dienen dem Suchprozeß nach dem optimalen Weg. Hat der Rechner des Datenspeichers 2 die entsprechende Code-Nummer des Fußgängerfeldes 8 ermittelt, sie liest er aus einer entsprechenden Liste die Namen derjenigen Straßen, die der Verkehrsteilnehmer 4 durchschreiten muß, um zum Ziel 6 zu gelangen. Diese Daten werden dem Bedien- und Anzeigegerät, Handterminal 1, übertragen und von diesem angezeigt (12). Eine grafische Zeigerdarstellung 11 kann ihm dabei die Richtung weisen und so seine Orientierung erleichtern. Dazu ist es erforderlich, daß der Verkehrsteilnehmer 4 einen bestimmten Standpunkt an der Haltestelle 5 einnimmt, der einerseits markiert sein kann, der andererseits auch dadurch gegeben ist, daß für die Übertragungsstrecke 2c ein enger Winkel und eine bestimmte Position vorgesehen ist.

Reicht das Schriftfeld 12 des Handterminals 1 nicht aus, um alle zu durchschreitenden Straßen auf einmal anzuzeigen, so muß der Verkehrsteilnehmer 4 eine der Blättertasten 13 betätigen, um die Straßennamen der Reihe nach sichtbar zu machen.

In einer Weiterbildung der Erfindung kann das Handterminal so ausgebildet sein, daß es als Aufsatz auf einen Fahrzeugnavigationsrechner paßt und dort dem Kraftfahrer während des Fahrens im Auto Informationen anzeigt. Ein derartiges Bedien- und Anzeigegerät, welches abnehmbar im Fahrzeug anbringbar ist, ist in der europäischen Patentanmeldung EP-A-458 019 (die unter Art. 54(3) EPÜ fällt) beschrieben.

Das Handterminal kann aber auch als Modul zum Einstecken im Fahrzeug-Navigationsrechner ausgebildet sein, z.B. wenn das Display zum Leiten ein fester, d.h. nicht abnehmbarer Bestandteil der Fahrzeugarmatur ist. In beiden Fällen kann das Handterminal dem Fahrzeug-Navigationsrechner die eingespeicherten Zieladressen übertragen und bereits während der Fahrt Fahrplaninformationen für öffentliche Verkehrsmittel und speziellen Leit- und Informationsbaken empfangen und speichern, so daß Autofahrer sowohl in ihrem Fahrzeug als auch bei Benutzung öffentlicher Verkehrsmittel unterbrechungslos zu ihrem Ziel geleitet werden können.

Wie bereits aus der Kraftfahrzeug-Leit- und Informationstechnik bekannt ist, kann das Handterminal auch eine Aufnahmevorrichtung für eine Chipkarte aufweisen, mit der sowohl Gebühren für die Benutzung von Leitinformationen als auch Parkgebühren oder Fahrpreise für öffentliche Verkehrsmittel gezahlt werden können.

Da sich Fahrplandaten öffentlicher Verkehrsmittel ändern oder Busse und Straßenbahnen verspäten, ist es vorteilhaft, wenn der Datenspeicher ohne besonders großen Aufwand mit aktuellen Daten versehen werden kann. Eine Möglichkeit hierfür ist, jeden Datenspeicher über eine Datenleitung mit einem Leitrechner der Verkehrsbetriebe zu verbinden, was sehr aufwendig ist.

In einer weiteren Ausgestaltung der Erfindung ist deshalb der Datenspeicher 2 mit einer weiteren Übertragungseinrichtung 2b ausgerüstet, über die er mit den vorbeifahrenden Verkehrsmitteln 9 in Verbindung treten kann. Dazu sind die Verkehrsmittel 9 mit einem Fahrzeug-Datenspeicher 14 ausgerüstet, der ebenfalls eine Übertragungseinrichtung 14a aufweist, um über die Übertragungsstrecke 14b mit dem Datenspeicher 2 der Haltestelle 5 zu kommunizieren. Die Datenspeicher 14 werden also als Zwischenträger für Fahrplaninformationen zwischen der Leitzentrale der Verkehrsbetriebe und den einzelnen Haltestellen benutzt. Dabei wird über die Kommunikationsstrecke 14b der ganze Inhalt des Datenspeichers 2 oder auch nur Teile desselben ausgetauscht. Eine derartige Datenübertragung kann aber auch in bereits bekannter Weise zur Positionsbestimmung des öffentlichen Verkehrsmittels 9 dienen und dem Datenspeicher 2 seine Abfahrt mitteilen, so daß eine exakte Synchronisierung der Fahrplanauskunft an den Haltestellen 5 mit den tatsächlichen Fahrzeiten möglich ist. Die Fahrgäste bzw. Verkehrsteilnehmer erfahren an der Haltestelle, ob das fahrplanmäßig erwartete Verkehrsmittel, z.B. Bus oder Straßenbahn, bereits abgefahren ist oder ob das Verkehrsmittel noch kommt. Natürlich werden auch die dem Anzeige- und Bediengerät, Handterminal 1, zu übertragenden weiteren Verbindungen an Umsteigestellen nach der Abfahrt des Verkehrsmittels 9 entsprechend verändert, d.h. auf die Abfahrtzeiten des nächsten abgestimmt.

## Patentansprüche

1. Auskunfts- und Zielführungs-System mit Stationen für einen Informationsaustausch, welche jeweils einen Datenspeicher (2) mit einem Rechner und zumindest eine Übertragungseinrichtung (2a) aufweisen sowie mit einem Handterminal (1) mit einer Bedien-und Anzeigeeinrichtung (10.11.12.13) und einer Übertragungseinrichtung (1a), wobei das Handterminal (1) über eine Übertragungsstrecke (2c) mit dem Datenspeicher verbindbar ist, **dadurch gekennzeichnet**, daß die besagten Einrichtungen (1,1a,2,2a) für den öffentlichen Personenverkehr, insbesondere Personennahverkehr (ÖPNV) vorgesehen sind,
daß die Stationen Haltestellen des öffentlichen Personenverkehrs sind,
daß im Datenspeicher der Stationen Verkehrsdaten für das Gebiet des öffentlichen Personenverkehrs gespeichert sind, daß das Gebiet des öffentlichen Personenverkehrs in eine Vielzahl von Zielgebieten, diese in Zielsegmente (7) und diese in Fußgängerfelder (Zielfelder 8) unterteilt ist, wobei diese Zielgebietseinteilung mittels eines einmal festgelegten Koordinatensystems (X, Y) mit den Verkehrsdaten im Datenspeicher (2) abgespeichert ist, daß im Handterminal (1) der Verkehrsteilnehmer eine Mehrzahl (i) von bestimmten Zieladressen mit den dazugehörigen Koordinaten (Xᵢ, Yᵢ) einspeicherbar sind, aus denen die gewünschte Zieladresse (6) bzw. der Zielpunkt (X_{z}, Y_{z}) am Handterminal (1) ausgewählt und zum Datenspeicher (2) übertragen wird, und daß aus den empfangenen Zielpunktkoordinaten (X_{z}, Y_{z}) der Datenspeicher (2) bzw. dessen Rechner das entsprechende Zielgebiet oder -segment (7) bzw. Fußgängerfeld (8) sowie die erforderlichen Verkehrsmittel und -wege mit zugehörigen Fahrdaten ermittelt und zum Handterminal (1) überträgt, welches diese Daten anzeigt (11; 12).

2. Auskunfts- und Zielführungs-System nach Anspruch 1 oder 2, **dadurch gekennzeichnet**, daß die Verkehrsdaten für die entsprechenden Zielgebietseinteilungen von Verkehrsverbindungen, Verkehrsmittel, Umsteigestellen, Ankunfts- und Abfahrtszeiten sowie Fahrzeiten und -preise gebildet sind.

3. Auskunfts- und Zielführungs-System nach einem der Ansprüche 1 bis 3, **dadurch gekennzeichnet**, daß der Datenspeicher (2) eine weitere Übertragungseinrichtung (2b) für einen Datenaustausch (2b,14a,14b) mit dem Fahrzeug-Datenspeicher (14) vorbeifahrende bzw. haltende Verkehrsmittel (9) aufweist, wodurch die Daten im Datenspeicher (2) aktualisiert werden.

4. Auskunfts- und Zielführungs-System nach einem der vorhergehenden Ansprüche, **dadurch gekennzeichnet**, daß das Handterminal derart ausgebildet ist, daß es auch an einem Fahrzeug-Navigationsrechner angebracht und elektrisch leitend verbunden werden kann.

5. Auskunfts- und Zielführungs-System nach einem der Ansprüche 1 bis 3, **dadurch gekennzeichnet**, daß der Datenspeicher mit einem Informations- und Leitrechner der Verkehrsbetriebe verbunden ist.

## Claims

1. Information and guidance system having stations for information interchange, which stations each have a data store (2) with a computer and each have at least one transmission device (2a), as well as having a hand terminal (1) with a control and display device (10.11.12.13) and a transmission device (1a), it being possible to connect the hand terminal (1) to the data store via a transmission path (2c), characterized in that the said devices (1,1a,2,2a) are provided for public transport, especially for local public transport (ÖPNV), in that the stations are stops for the public transport, in that traffic data for the public transport region are stored in the data store at the stations, in that the public transport region is split into a large number of destination regions, these are split into destination segments (7), and these are split into pedestrian fields (destination fields 8), this destination region breakdown being stored by means of a coordinate system (X, Y), which is defined once, with the traffic data in the data store (2), in that a plurality (i) of specific destination addresses can be stored, with the associated coordinates (Xᵢ, Yᵢ), in the hand terminal (1) of the traffic participants, from which coordinates (Xᵢ, Yᵢ) the desired destination address (6) or the desired destination point (X_{z}, Y_{z}) is selected on the hand terminal (1) and is transmitted to the data store (2), and in that the data store (2) or its computer determines from the received destination point coordinates (X_{z}, Y_{z}) the corresponding destination region or segment (7) or pedestrian field (8) as well as the required traffic means and routes with the associated routing data, and transmits this to the hand terminal (1), which displays these data (11; 12).

2. Information and guidance system according to Claim 1 or 2, characterized in that the traffic data are formed for the corresponding destination region breakdowns of traffic connections, vehicles, changing points, arrival and departure times, as well as travelling times and prices.

3. Information and guidance system according to one of Claims 1 to 3, characterized in that the data store (2) has a further transmission device (2b) for a data interchange (2b,14a,14b) with the vehicle data store (14) in vehicles (9) moving past or stopping, by means of which the data in the data store (2) are updated.

4. Information and guidance system according to one of the preceding claims, characterized in that the hand terminal is constructed in such a manner that it can also be fitted and electrically conductively connected to a vehicle navigation computer.

5. Information and guidance system according to one of Claims 1 to 3, characterized in that the data store is connected to an information and host computer of the transport companies.

## Revendications

1. Système de renseignement et de guidage comportant des stations destinées à un échange d'informations, les stations ayant chacune une mémoire (2) de données comportant un ordinateur et au moins un dispositif (2a) de transmission et les stations ayant en outre un terminal manuel (1) comportant un dispositif (10.11.12.13) de commande et d'indication et un dispositif (1a) de transmission, le terminal (1) portable pouvant être relié par l'intermédiaire d'une voie (2c) de transmission à la mémoire de données, caractérisé en ce que lesdits dispositifs (1,1a, 2,2a) sont prévus pour les transports publics de voyageurs, notamment les transports (ÖPNV) régionaux,
les stations sont des arrêts des transports publics de voyageurs,
il est mémorisé dans la mémoire de données des stations, des données de transport pour la région des transports publics de voyageurs, la région des transports publics de voyageurs est subdivisée en une pluralité de régions de destination, celles-ci l'étant en segments (7) de destination et ces derniers l'étant en zones piétonnes (zones 8 de destination), cette subdivision en régions de destination étant mémorisée au moyen d'un système (X,Y) de coordonnées fixé une fois, conjointement avec les données de transport dans la mémoire de données, il peut être mémorisé dans le terminal (1) manuel des usagers des transports une pluralité (i) de données déterminées de destination par les coordonnées (Xᵢ, Yᵢ) correspondantes, parmi lesquelles l'adresse (6) de destination souhaitée ou le point (X_{z}, Y_{z}) de destination est sélectionné sur le terminal (1) manuel et est transmis à la mémoire (2) de données, et la mémoire (2) de données ou son ordinateur détermine, à partir des coordonnées (X_{z}, Y_{z}) reçues du point de destination, la région ou le segment (7) ou la zone piétonne (8) de destination correspondante ainsi que les moyens et voies de transport nécessaires y compris les données de trajets associées et les transmet au terminal (1) manuel, qui indique (11; 12) ces données.

2. Système de renseignement et de guidage suivant la revendication 1 ou 2, caractérisé en ce que les données de transport pour les subdivisions correspondantes en région de destination sont formées de liaisons de transport, de moyens de transport, d'arrêts de correspondances, d'horaires d'arrivée et de départ ainsi que de temps de trajets et de prix de trajets.

3. Système de renseignement et de guidage suivant l'une des revendications 1 et 2, caractérisé en ce que la mémoire (2) de données comporte un autre dispositif (2b) de transmission destiné à un échange (2b, 14a, 14b) de données avec la mémoire (14) de données du véhicule des moyens (9) de transport passant devant la mémoire (2) de données ou s'y arrêtant, ce qui actualise les données dans la mémoire (2) de données.

4. Système de renseignement et de guidage suivant l'une des revendications précédentes, caractérisé en ce que le terminal manuel est formé de sorte à pouvoir être disposé également sur un ordinateur de navigation de véhicule et à pouvoir être relié par conduction électrique.

5. Système de renseignement et de guidage suivant l'une des revendications 1 à 3, caractérisé en ce que la mémoire de données est reliée à un ordinateur de pilotage et d'information des services de transport.
